# EUROPEAN PATENT SPECIFICATION

(11) **EP 4 393 682 B1**
(45) Date of publication and mention of the grant of the patent: **13.08.2025**
(21) Application number: 23866635.8
(22) Date of filing: 20.02.2023
(51) Int. Cl.: B29C 64/321, B29C 64/118, B29C 64/209, B33Y 30/00, B33Y 40/00

(54) **WIRE FEEDING MECHANISM SUITABLE FOR FUSED DEPOSITION ADDITIVE MANUFACTURING OF FLEXIBLE WIRE**
DRAHTZUFÜHRMECHANISMUS ZUR GENERATIVEN SCHMELZABLAGERUNGSFERTIGUNG EINES FLEXIBLEN DRAHTS
MÉCANISME D'ALIMENTATION EN FIL APPROPRIÉ POUR LA FABRICATION ADDITIVE PAR DÉPÔT FONDU D'UN FIL FLEXIBLE

(30) Priority: 28.10.2022 CN 202211335743
(43) Date of publication of application: 03.07.2024
(73) Proprietor: Nanjing University of Aeronautics and Astronautics, Nanjing, Jiangsu 210016 (CN)
(72) Inventor: SONG, Wenzhe, Nanjing, Jiangsu 210016 (CN); FAN, Congze, Nanjing, Jiangsu 210016 (CN); SHAN, Zhongde, Nanjing, Jiangsu 210016 (CN); ZHENG, Jinghua, Nanjing, Jiangsu 210016 (CN); CHEN, Yiwei, Nanjing, Jiangsu 210016 (CN); LUO, Linlin, Nanjing, Jiangsu 210016 (CN)
(74) Representative: Proi World Intellectual Property GmbH
(86) International application number: PCT/CN2023/077081
(87) International publication number: WO 2024/087421

(56) References cited:
- WO-A1-2022/171729
- WO-A1-2022/222431
- CN-A- 106 515 006
- CN-U- 206 277 660
- CN-U- 208 084 991
- CN-U- 210 590 615
- CN-U- 215 882 592

## Description

### TECHNICAL FIELD

The present invention relates to the technical field of Three-Dimensional (3D) printing, and in particular to a wire feeding mechanism suitable for fused deposition Additive Manufacturing (AM) of a flexible wire.

### BACKGROUND

At present, AM (commonly known as 3D printing) technology has become a research hotspot at home and abroad. The technology has the characteristics of rapidity, high efficiency, flexibility, etc., and does not need traditional molds, tools and fixtures, but uses 3D design data to efficiently and accurately manufacture, on an AM device, parts with any complex shape and structure. The AM technology can process a wide range of raw materials. The AM technology of non-metallic materials (mainly organic polymer materials) has been relatively mature.

The document CN 208 084 991 U discloses a 3D printing flexible material wire feeding mechanism, which comprises: a motor bracket, a motor, a wire feeding wheel, a passive bearing matched with a wire feeding wheel, a throat pipe, a heating block, a nozzle, a spring and a spring tab.

In the prior art, in order to prevent wire winding, a hook may be provided on the device for wire separation. But when a relatively soft flexible material such as a Thermoplastic Polyurethane (TPU) material is printed, the position in contact with the hook is likely to cause temporary accumulation and then cake, which affects the progress of wire feeding, and even directly affects the printing effect.

### SUMMARY

In order to solve the above problem, the present invention discloses a wire feeding mechanism suitable for fused deposition AM of a flexible wire, which aims to solve the technical problem that when a flexible material is printed, the position in contact with a hook is likely to cause temporary accumulation and then cake.

In order to achieve the above objectives, the present invention adopts the following technical solution:

A wire feeding mechanism suitable for fused deposition Additive Manufacturing (AM) of a flexible wire, comprising a support housing, a melting nozzle is arranged at the lower end of the support housing, a hook is connected to the inner wall of the top end of the support housing, a connecting rod is connected to the inner wall of one side of the support housing, a wire drawing mechanism is connected to one end of the connecting rod, the wire drawing mechanism is located below the hook, a limiting mechanism and a wire guide mechanism are connected to the inner wall of one side of the support housing, the limiting mechanism is located below the wire drawing mechanism, the wire guide mechanism is located below the limiting mechanism, the wire drawing mechanism comprises a support seat, the support seat is connected to the connecting rod, an electric chute is arranged in the inner wall of the top end of the support seat, an electric sliding block is movably connected to the inner wall of the electric chute in a clamped manner, a sixth bracket is connected to the outer wall of the top end of the electric sliding block, a plurality of third connecting shafts are arranged on the inner wall of the sixth bracket, a fourth roller is connected to the outer wall of each of the third connecting shafts in a sleeving manner, a wire is arranged on the hook, and the wire passes through the limiting mechanism and the wire guide mechanism in sequence.

A wire drawing mechanism is arranged. Since the wire is a flexible wire, when the wire is hung on the hook and conveyed to the position of a melting nozzle under the action of a wire guide mechanism, the position in contact with the hook is likely to cause temporary accumulation and then cake. A sixth bracket is driven via an electric sliding block in the wire drawing mechanism to move along an electric chute in a support seat. When the electric sliding block moves to a high position of the electric chute, a fourth roller just contacts the bottom end of the wire on the hook, and the movement of the wire may also drive the fourth roller to move, thereby acting on a joint between the wire and the hook and reducing the risk of wire caking. Meanwhile, the circulating movement of the electric sliding block in the electric chute also plays a role of assisting the wire to loosen the caking position. When the electric sliding block slides to the lower end of the electric chute, the electric sliding block may be disconnected from the wire, thus avoiding a situation of knotting caused by torsion of the wire driven by the circulating movement.

In a preferred solution, the wire guide mechanism comprises a limiting block, a third connecting rod is arranged at both sides of the limiting block, the third connecting rod is connected to the inner wall of the support housing, a third roller is arranged aside the limiting block, a plurality of rubber pads are arranged on the outer wall of the third roller at equal density, and the wire is located between the rubber pads and the limiting block. Preferred embodiments are defined in the dependent claims.

The second pneumatic rod can be arranged, and a telescopic length of the second pneumatic rod can be controlled, so that the position between the limiting block and the rubber pad on the third roller can be further controlled. Accordingly, the wire guide mechanism is applicable to wires of different models for use. Meanwhile, through the arranged rubber pad, the wire with the material being a flexible wire can be protected from damage during wire guide while the third roller is ensured to tightly contact the wire, thus avoiding the wire from being deformed by extrusion of the third roller.

The second clamp block can be connected to the inner wall of the fifth bracket in a clamped manner, so that the position of the second gear is ensured, and the second gear can be ensured to be perfectly clamped with the gear. Meanwhile, the sliding block is connected into the top chute in a clamped manner, and the clamp strips on the two sides are connected into the clamp slots in a clamped manner, so that three orientations of the third roller can all be limited, it can be guaranteed that the third roller is not loosened and displaced during long-time use, the third roller can be avoided from being separated from a clamping position with the limiting block, and the service life of the wire feeding mechanism can be guaranteed.

The limiting mechanism is arranged and acts on the two sides of the wire, so that the wire can accurately enter the wire guide mechanism, and the wire can be avoided from dislocation to cause the wire guide mechanism incapable of normally guiding the wire. Meanwhile, the soft bumps are arranged on the outer wall of the second roller at equal density, so that when the wire is limited and contacts the soft bumps, the second roller may be driven to rotate. Under the action of the ball bearings, the friction subjected to by the second roller during rotation can be reduced. In a rotating process of the second roller, the soft bumps can be intermittently separated from the wire, so that the surface of wire can be avoided from abrasion caused due to long-term contact with the wire.

The working principle of the present invention is: when in use, the sixth bracket is driven via the electric sliding block in the wire drawing mechanism to move along the electric chute in the support seat. When the electric sliding block moves to a high position of the electric chute, the fourth roller just contacts the bottom end of the wire on the hook, and the movement of the wire may also drive the fourth roller to move, thereby acting on a joint between the wire and the hook and reducing the risk of wire caking. Meanwhile, the circulating movement of the electric sliding block in the electric chute also plays a role of assisting the wire to loosen the caking position. When the electric sliding block slides to the lower end of the electric chute, the electric sliding block may be disconnected from the wire, thus avoiding a situation of knotting caused by torsion of the wire driven by the circulating movement.

It can be seen from the above that the beneficial effects of the present invention are that:
1. The wire feeding mechanism suitable for fused deposition AM of a flexible wire has the effect of reducing the risk of caking at the joint between the wire and the hook.
2. The printing effect is ensured and the work efficiency is improved.
3. The service life of the device is prolonged.

### BRIEF DESCRIPTION OF DRAWINGS

FIG. 1 is a schematic structural diagram of overall appearance of a wire feeding mechanism suitable for fused deposition AM of a flexible wire proposed by the present invention.
FIG. 2 is an overall schematic structural diagram of inside of a wire feeding mechanism suitable for fused deposition AM of a flexible wire proposed by the present invention.
FIG. 3 is a schematic structural diagram of splitting a limiting mechanism of a wire feeding mechanism suitable for fused deposition AM of a flexible wire proposed by the present invention.
FIG. 4 is a schematic structural diagram of splitting a wire guide mechanism of a wire feeding mechanism suitable for fused deposition AM of a flexible wire proposed by the present invention.
FIG. 5 is a schematic structural diagram of splitting a wire drawing mechanism of a wire feeding mechanism suitable for fused deposition AM of a flexible wire proposed by the present invention.

In the figure: 1, support housing; 2, wire; 3, melting nozzle; 4, hook; 5, wire drawing mechanism; 6, connecting rod; 7, limiting mechanism; 8, wire guide mechanism; 9, second connecting rod; 10, bracket; 11, connecting shaft; 12, roller; 13, clamp block; 14, second connecting shaft; 15, ball bearing; 16, second bracket; 17, pneumatic rod; 18, second roller; 19, soft bump; 20, third connecting rod; 21, limiting block; 22, rubber pad; 23, third roller; 24, gear; 25, motor; 26, second clamp block; 27, second gear; 28, third bracket; 29, clamp strip; 30, fourth bracket; 31, second pneumatic rod; 32, clamp slot; 33, top chute; 34, fifth bracket; 35, sliding block; 36, support plate; 37, connecting seat; 38, sixth bracket; 39, fourth roller; 40, third connecting shaft; 41, electric sliding block; 42, electric chute; and 43, support seat.

### DETAILED DESCRIPTION OF THE EMBODIMENTS

The present invention is further illustrated below in conjunction with the drawings and specific embodiments, and it should be understood that the following specific embodiments are merely used to illustrate the present invention and not to limit the scope of the present invention. It should be noted that the words "front", "back", "left", "right", "upper", and "lower" used in the following description refer to directions in the drawings, and the words "inner" and "outer" respectively refer to directions toward or away from the geometric center of a particular component.

A wire feeding mechanism suitable for fused deposition AM of a flexible wire disclosed in the present invention is mainly applied to a scenario of 3D printing.

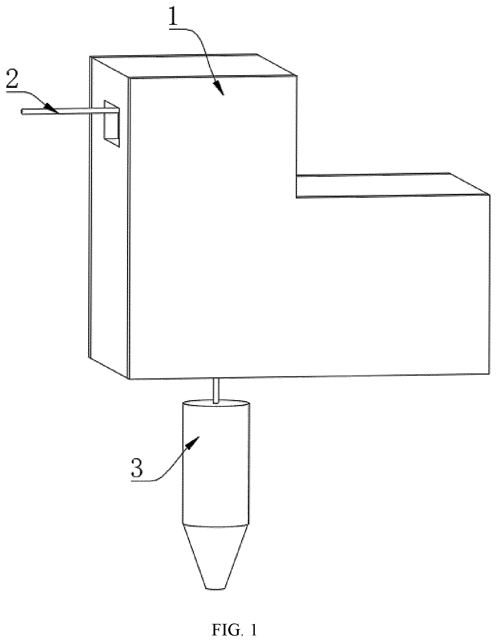

Referring to FIGS. 1, 2 and 5, a wire feeding mechanism suitable for fused deposition AM of a flexible wire includes a support housing 1. A melting nozzle 3 is arranged at the lower end of the support housing 1, a hook 4 is connected to the inner wall of the top end of the support housing 1, a connecting rod 6 is connected to the inner wall of one side of the support housing 1, a wire drawing mechanism 5 is connected to one end of the connecting rod 6, the wire drawing mechanism 5 is located below the hook 4, a limiting mechanism 7 and a wire guide mechanism 8 are connected to the inner wall of one side of the support housing 1, the limiting mechanism 7 is located below the wire drawing mechanism 5, the wire guide mechanism 8 is located below the limiting mechanism 7, the wire drawing mechanism 50 includes a support seat 43, the support seat 43 is connected to the connecting rod 6, an electric chute 42 is arranged in the inner wall of the top end of the support seat 43, an electric sliding block 41 is movably connected to the inner wall of the electric chute 42 in a clamped manner, a sixth bracket 38 is connected to the outer wall of the top end of the electric sliding block 41, a plurality of third connecting shafts 40 are arranged on the inner wall of the sixth bracket 38, a fourth roller 39 is connected to the outer walls of the plurality of third connecting shafts 40 in a sleeving manner, a wire 2 is arranged on the hook 4, and the wire 2 passes through the limiting mechanism 7 and the wire guide mechanism 8 at the same time.

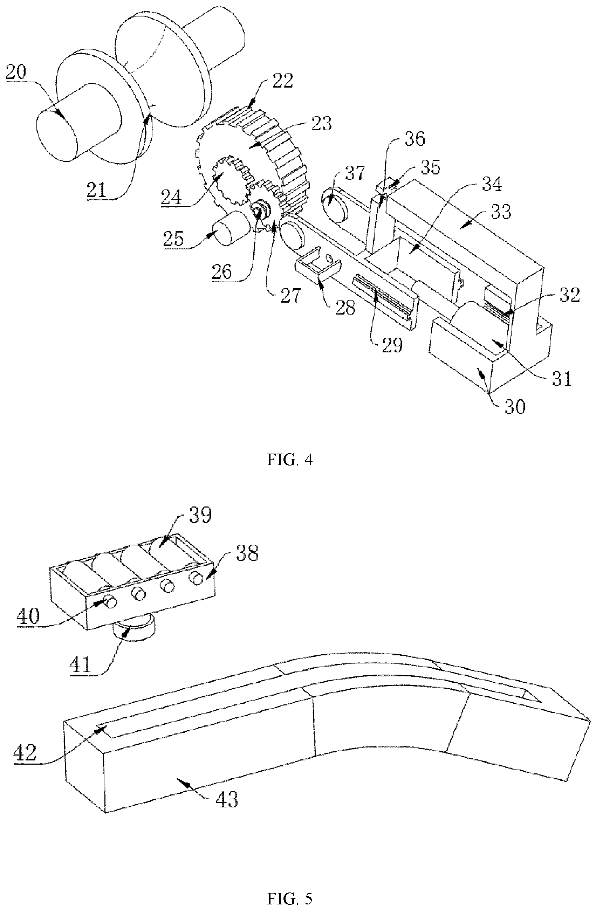

Referring to FIG. 4, in a preferred implementation, the wire guide mechanism 8 includes a limiting block 21, a third connecting rod 20 is arranged at both sides of the limiting block 21, the third connecting rod 20 is connected to the inner wall of the support housing 1, the wire guide mechanism 8 includes a third roller 23, a plurality of rubber pads 22 are arranged on the outer wall of the third roller 23 at equal density, and the wire 2 is located between the rubber pads 22 and the limiting block 21.

Referring to FIG. 4, in a preferred implementation, a gear 24 is connected to the outer wall of one side of the third roller 23, a second gear 27 is connected to the outer wall of the gear 24 in a clamped manner, a second clamp block 26 is connected to the outer wall of one side of the second gear 27, and a motor 25 is connected to one end of the second clamp block 26.

Referring to FIG. 4, in a preferred implementation, a fifth bracket 34 is movably connected to the inner wall of the second clamp block 26 in a clamped manner, a connecting seat 37 is arranged on the inner walls of two sides of the fifth bracket 34, the connecting seat 37 is connected to the gear 24 and the third roller 23, respectively, a third bracket 28 is arranged on the outer wall of one side of the fifth bracket 34, the third bracket 28 is connected to the motor 25, a fourth bracket 30 is movably connected to the outer wall of the fifth bracket 34, a second pneumatic rod 31 is arranged on the inner wall of one side of the fourth bracket 30, and the second pneumatic rod 31 is connected to the fifth bracket 34 at the same time. The second pneumatic rod 31 is arranged, and a telescopic length of the second pneumatic rod 31 is controlled, so that the position between the limiting block 21 and the rubber pad 22 on the third roller 23 can be further controlled. Accordingly, the wire guide mechanism 8 is applicable to wires 2 of different models for use. Meanwhile, through the arranged rubber pad 22, the wire 2 with the material being a flexible wire can be protected from damage during wire guide while the third roller 23 is ensured to tightly contact the wire 2, thus avoiding the wire 2 from being deformed by extrusion of the third roller 23.

Referring to FIG. 4, in a preferred implementation, clamp strips 29 are arranged on the outer walls of the two sides of the fifth bracket 34, clamp slots 32 are formed in the inner walls of the two sides of the fourth bracket 30, and the fifth bracket 34 is movably connected to the fourth bracket 30 by interconnecting the clamp strips 29 and the clamp slots 32 in a clamped manner.

Referring to FIG. 4, in a preferred implementation, a support plate 36 is connected to the outer wall of one side of the fifth bracket 34, a sliding block 35 is arranged at the top end of the support plate 36, a top chute 33 is connected to the top end of the fourth bracket 30, and the sliding block 35 is movably connected into the top chute 33 in a clamped manner. The second clamp block 26 is connected to the inner wall of the fifth bracket 34 in a clamped manner, so that the position of the second gear 27 is ensured, and the second gear 27 can be ensured to be perfectly clamped with the gear 24. Meanwhile, the sliding block 35 is connected into the top chute 33 in a clamped manner, and the clamp strips 29 on the two sides are connected into the clamp slots 32 in a clamped manner, so that three orientations of the third roller 23 can all be limited, it can be guaranteed that the third roller 23 is not loosened and displaced during long-time use, the third roller 23 can be avoided from being separated from a clamping position with the limiting block 21, and the service life of the wire feeding mechanism can be guaranteed.

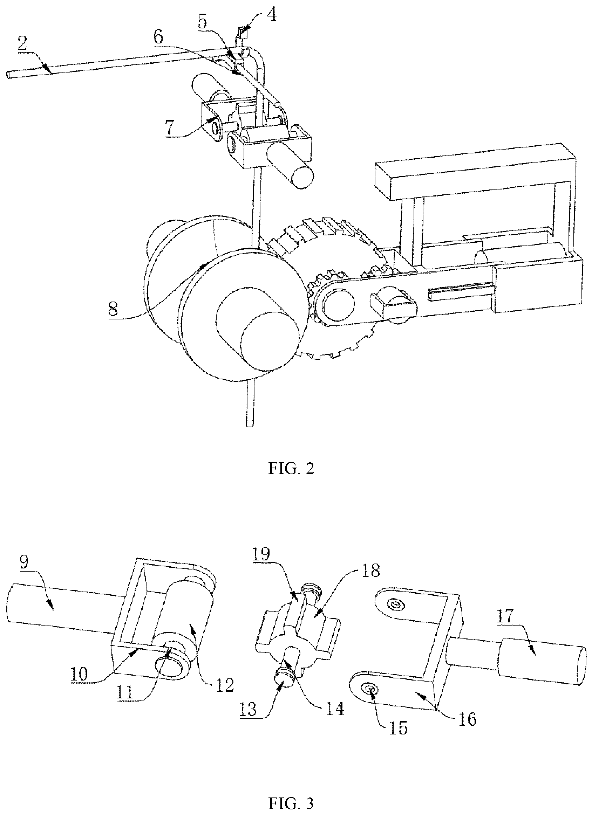

Referring to FIG. 3, in a preferred implementation, the limiting mechanism 7 includes a bracket 10 and a second bracket 16, a second connecting rod 9 is connected to the outer wall of one side of the bracket 10, the second connecting rod 9 is connected to the support housing 1, a connecting shaft 11 is arranged on the inner wall of the bracket 10, and a roller 12 is connected to the outer wall of the connecting shaft 11 in a sleeving manner.

Referring to FIG. 3, in a preferred implementation, ball bearings 15 are arranged on the inner walls of two sides of the second bracket 16, a clamp block 13 is connected to the inner walls of the ball bearings 15 in a clamped manner, a second connecting shaft 14 is connected to one side of the clamp block 13, a second roller 18 is connected to the outer wall of the second connecting shaft 14 in a sleeving manner, soft bumps 19 are arranged on the outer wall of the second roller 18 at equal density, a pneumatic rod 17 is connected to one side of the second bracket 16, and the other side of the pneumatic rod 17 is connected to the support housing 1. The limiting mechanism 7 is arranged and acts on the two sides of the wire 2, so that the wire 2 can accurately enter the wire guide mechanism 8, and the wire 2 can be avoided from dislocation to cause the wire guide mechanism 8 incapable of normally guiding the wire. Meanwhile, the soft bumps 19 are arranged on the outer wall of the second roller 18 at equal density, so that when the wire 2 is limited and contacts the soft bumps 19, the second roller 18 may be driven to rotate. Under the action of the ball bearings 15, the friction subjected to by the second roller 18 during rotation can be reduced. In a rotating process of the second roller 18, the soft bumps 19 can be intermittently separated from the wire 2, so that the surface of wire 2 can be avoided from abrasion caused due to long-term contact with the wire 2.

Working principle: when in use, the sixth bracket 38 is driven via the electric sliding block 41 in the wire drawing mechanism 5 to move along the electric chute 42 in the support seat 43. When the electric sliding block 41 moves to a high position of the electric chute 42, the fourth roller 39 just contacts the bottom end of the wire 2 on the hook 4, and the movement of the wire 2 may also drive the fourth roller 39 to move, thereby acting on a joint between the wire 2 and the hook 4 and reducing the risk of wire 2 caking. Meanwhile, the circulating movement of the electric sliding block 41 in the electric chute 42 also plays a role of assisting the wire 2 to loosen the caking position. When the electric sliding block 41 slides to the lower end of the electric chute 42, the electric sliding block 41 may be disconnected from the wire 2, thus avoiding a situation of knotting caused by torsion of the wire 2 driven by the circulating movement.

The technical means disclosed by the solution of the present invention are not limited to these disclosed in the above implementations.

## Claims

1. A wire feeding mechanism suitable for fused deposition Additive Manufacturing (AM) of a flexible wire, comprising a support housing (1), wherein a melting nozzle (3) is arranged at the lower end of the support housing (1), **characterised in that** a hook (4) is connected to the inner wall of the top end of the support housing (1), a connecting rod (6) is connected to the inner wall of one side of the support housing (1), a wire drawing mechanism (5) is connected to one end of the connecting rod (6), the wire drawing mechanism (5) is located below the hook (4), a limiting mechanism (7) and a wire guide mechanism (8) are connected to the inner wall of one side of the support housing (1), the limiting mechanism (7) is located below the wire drawing mechanism (5), the wire guide mechanism (8) is located below the limiting mechanism (7), the wire drawing mechanism (50) comprises a support seat (43), the support seat (43) is connected to the connecting rod (6), an electric chute (42) is arranged in the inner wall of the top end of the support seat (43), an electric sliding block (41) is movably connected to the inner wall of the electric chute (42) in a clamped manner, a sixth bracket (38) is connected to the outer wall of the top end of the electric sliding block (41), a plurality of third connecting shafts (40) are arranged on the inner wall of the sixth bracket (38), a fourth roller (39) is connected to the outer wall of each of the third connecting shafts (40) in a sleeving manner, a wire (2) is arranged on the hook (4), and the wire (2) passes through the limiting mechanism (7) and the wire guide mechanism (8) in sequence.

2. The wire feeding mechanism suitable for fused deposition AM of a flexible wire according to claim 1, wherein the wire guide mechanism (8) comprises a limiting block (21), a third connecting rod (20) is arranged at both sides of the limiting block (21), the third connecting rod (20) is connected to the inner wall of the support housing (1), a third roller (23) is arranged aside the limiting block (21), a plurality of rubber pads (22) are arranged on the outer wall of the third roller (23) at equal density, and the wire (2) is located between the rubber pads (22) and the limiting block (21).

3. The wire feeding mechanism suitable for fused deposition AM of a flexible wire according to claim 2, wherein a gear (24) is connected to the outer wall of one side of the third roller (23), a second gear (27) is connected to the outer wall of the gear (24) in a clamped manner, a second clamp block (26) is connected to the outer wall of one side of the second gear (27), and a motor (25) is connected to one end of the second clamp block (26).

4. The wire feeding mechanism suitable for fused deposition AM of a flexible wire according to claim 3, wherein a fifth bracket (34) is movably connected to the inner wall of the second clamp block (26) in a clamped manner, a connecting seat (37) is arranged on the inner walls of two sides of the fifth bracket (34), the connecting seat (37) is connected to the gear (24) and the third roller (23), respectively, a third bracket (28) is arranged on the outer wall of one side of the fifth bracket (34), the third bracket (28) is connected to the motor (25), a fourth bracket (30) is movably connected to the outer wall of the fifth bracket (34), a second pneumatic rod (31) is arranged on the inner wall of one side of the fourth bracket (30), and the second pneumatic rod (31) is connected to the fifth bracket (34) at the same time.

5. The wire feeding mechanism suitable for fused deposition AM of a flexible wire according to claim 4, wherein clamp strips (29) are arranged on the outer walls of the two sides of the fifth bracket (34), clamp slots (32) are formed in the inner walls of the two sides of the fourth bracket (30), and the fifth bracket (34) is movably connected to the fourth bracket (30) by interconnecting the clamp strips (29) and the clamp slots (32) in a clamped manner.

6. The wire feeding mechanism suitable for fused deposition AM of a flexible wire according to claim 5, wherein a support plate (36) is connected to the outer wall of one side of the fifth bracket (34), a sliding block (35) is arranged at the top end of the support plate (36), a top chute (33) is connected to the top end of the fourth bracket (30), and the sliding block (35) is movably connected into the top chute (33) in a clamped manner.

7. The wire feeding mechanism suitable for fused deposition AM of a flexible wire according to claim 1, wherein the limiting mechanism (7) comprises a bracket (10) and a second bracket (16), a second connecting rod (9) is connected to the outer wall of one side of the bracket (10), the second connecting rod (9) is connected to the support housing (1), a connecting shaft (11) is arranged on the inner wall of the bracket (10), and a roller (12) is connected to the outer wall of the connecting shaft (11) in a sleeving manner.

8. The wire feeding mechanism suitable for fused deposition AM of a flexible wire according to claim 7, wherein ball bearings (15) are arranged on the inner walls of two sides of the second bracket (16), a clamp block (13) is connected to the inner walls of the ball bearings (15) in a clamped manner, a second connecting shaft (14) is connected to one side of the clamp block (13), a second roller (18) is connected to the outer wall of the second connecting shaft (14) in a sleeving manner, soft bumps (19) are arranged on the outer wall of the second roller (18) at equal density, a pneumatic rod (17) is connected to one side of the second bracket (16), and the other side of the pneumatic rod (17) is connected to the support housing (1).

## Patentansprüche

1. Drahtvorschubmechanismus, der für die additive Fertigung (AM) eines flexiblen Drahtes durch Schmelzabscheidung geeignet ist, mit einem Trägergehäuse (1), wobei eine Schmelzdüse (3) am unteren Ende des Trägergehäuses (1) angeordnet ist, **dadurch gekennzeichnet, dass** ein Haken (4) mit der Innenwand des oberen Endes des Trägergehäuses (1) verbunden ist, eine Verbindungsstange (6) mit der Innenwand einer Seite des Trägergehäuses (1) verbunden ist, ein Drahtziehmechanismus (5) ist mit einem Ende der Verbindungsstange (6) verbunden, der Drahtziehmechanismus (5) ist unterhalb des Hakens (4) angeordnet, ein Begrenzungsmechanismus (7) und ein Drahtführungsmechanismus (8) sind mit der Innenwand einer Seite des Trägergehäuses (1) verbunden, der Begrenzungsmechanismus (7) ist unterhalb des Drahtziehmechanismus (5) angeordnet, der Drahtführungsmechanismus (8) ist unterhalb des Begrenzungsmechanismus (7) angeordnet, der Drahtziehmechanismus (50) einen Stützsitz (43) umfasst, der Stützsitz (43) mit der Verbindungsstange (6) verbunden ist, eine elektrische Rutsche (42) in der Innenwand des oberen Endes des Stützsitzes (43) angeordnet ist, ein elektrischer Gleitblock (41) mit der Innenwand der elektrischen Rutsche (42) in einer geklemmten Weise beweglich verbunden ist, eine sechste Klammer (38) mit der Außenwand des oberen Endes des elektrischen Gleitblocks (41) verbunden ist, mehrere dritte Verbindungswellen (40) an der Innenwand des sechsten Bügels (38) angeordnet sind, eine vierte Rolle (39) mit der Außenwand jeder der dritten Verbindungswellen (40) schlauchartig verbunden ist, ein Draht (2) auf dem Haken (4) angeordnet ist und der Draht (2) nacheinander durch den Begrenzungsmechanismus (7) und den Drahtführungsmechanismus (8) läuft.

2. Drahtvorschubmechanismus, geeignet für die Schmelzabscheidung AM eines flexiblen Drahtes nach Anspruch 1, wobei der Drahtführungsmechanismus (8) einen Begrenzungsblock (21) umfasst, eine dritte Verbindungsstange (20) an beiden Seiten des Begrenzungsblocks (21) angeordnet ist, die dritte Verbindungsstange (20) mit der Innenwand des Trägergehäuses (1) verbunden ist, eine dritte Rolle (23) seitlich des Begrenzungsblocks (21) angeordnet ist, eine Vielzahl von Gummipads (22) an der Außenwand der dritten Rolle (23) in gleicher Dichte angeordnet sind und der Draht (2) sich zwischen den Gummipads (22) und dem Begrenzungsblock (21) befindet.

3. Drahtvorschubmechanismus, der für die Schmelzabscheidung AM eines flexiblen Drahtes geeignet ist, nach Anspruch 2, wobei ein Zahnrad (24) mit der Außenwand einer Seite der dritten Walze (23) verbunden ist, ein zweites Zahnrad (27) mit der Außenwand des Zahnrads (24) in geklemmter Weise verbunden ist, ein zweiter Klemmblock (26) mit der Außenwand einer Seite des zweiten Zahnrads (27) verbunden ist und ein Motor (25) mit einem Ende des zweiten Klemmblocks (26) verbunden ist.

4. Drahtvorschubmechanismus, der für die Schmelzabscheidung AM eines flexiblen Drahts geeignet ist, gemäß Anspruch 3, wobei ein fünfter Bügel (34) beweglich mit der Innenwand des zweiten Klemmblocks (26) in einer geklemmten Weise verbunden ist, ein Verbindungssitz (37) an den Innenwänden von zwei Seiten des fünften Bügels (34) angeordnet ist, der Verbindungssitz (37) mit dem Zahnrad (24) bzw. der dritten Rolle (23) verbunden ist, ein dritter Träger (28) an der Außenwand einer Seite des fünften Trägers (34) angeordnet ist, der dritte Träger (28) mit dem Motor (25) verbunden ist, ein vierter Träger (30) beweglich mit der Außenwand des fünften Trägers (34) verbunden ist, eine zweite pneumatische Stange (31) an der Innenwand einer Seite des vierten Trägers (30) angeordnet ist und die zweite pneumatische Stange (31) gleichzeitig mit dem fünften Träger (34) verbunden ist.

5. Drahtvorschubmechanismus, der für die Schmelzabscheidung AM eines flexiblen Drahtes geeignet ist, nach Anspruch 4, wobei Klemmstreifen (29) an den Außenwänden der beiden Seiten des fünften Trägers (34) angeordnet sind, Klemmschlitze (32) in den Innenwänden der beiden Seiten des vierten Trägers (30) ausgebildet sind und der fünfte Träger (34) beweglich mit dem vierten Träger (30) verbunden ist, indem die Klemmstreifen (29) und die Klemmschlitze (32) klemmend miteinander verbunden sind.

6. Drahtvorschubmechanismus, der für die Schmelzabscheidung AM eines flexiblen Drahtes geeignet ist, gemäß Anspruch 5, wobei eine Stützplatte (36) mit der Außenwand einer Seite des fünften Trägers (34) verbunden ist, ein Gleitblock (35) am oberen Ende der Stützplatte (36) angeordnet ist, eine obere Rutsche (33) mit dem oberen Ende des vierten Trägers (30) verbunden ist und der Gleitblock (35) beweglich in die obere Rutsche (33) geklemmt ist.

7. Drahtvorschubmechanismus, der für die Schmelzabscheidung AM eines flexiblen Drahts geeignet ist, nach Anspruch 1, wobei der Begrenzungsmechanismus (7) einen Bügel (10) und einen zweiten Bügel (16) umfasst, wobei eine zweite Verbindungsstange (9) mit der Außenwand einer Seite des Bügels (10) verbunden ist, wobei die zweite Verbindungsstange (9) mit dem Trägergehäuse (1) verbunden ist, wobei eine Verbindungswelle (11) an der Innenwand des Bügels (10) angeordnet ist, und wobei eine Rolle (12) mit der Außenwand der Verbindungswelle (11) in einer Hülsenform verbunden ist.

8. Drahtvorschubmechanismus, der für die Schmelzabscheidung AM eines flexiblen Drahtes geeignet ist, nach Anspruch 7, wobei Kugellager (15) an den Innenwänden von zwei Seiten des zweiten Trägers (16) angeordnet sind, ein Klemmblock (13) mit den Innenwänden der Kugellager (15) klemmend verbunden ist, eine zweite Verbindungswelle (14) mit einer Seite des Klemmblocks (13) verbunden ist, eine zweite Rolle (18) mit der Außenwand der zweiten Verbindungswelle (14) schlauchartig verbunden ist, an der Außenwand der zweiten Rolle (18) weiche Unebenheiten (19) in gleicher Dichte angeordnet sind, eine pneumatische Stange (17) mit einer Seite des zweiten Trägers (16) verbunden ist und die andere Seite der pneumatischen Stange (17) mit dem Trägergehäuse (1) verbunden ist.

## Revendications

1. Mécanisme d'alimentation en fil adapté à la fabrication additive par dépôt fusionné (AM) d'un fil flexible, comprenant un boîtier de support (1), dans lequel une buse de fusion (3) est disposée à l'extrémité inférieure du boîtier de support (1), **caractérisé en ce qu'**un crochet (4) est relié à la paroi interne de l'extrémité supérieure du boîtier de support (1), une bielle (6) est reliée à la paroi interne d'un côté du boîtier de support (1), un mécanisme de tréfilage (5) est relié à une extrémité de la bielle (6), le mécanisme de tréfilage (5) est situé sous le crochet (4), un mécanisme de limitation (7) et un mécanisme de guidage du fil (8) sont reliés à la paroi interne d'un côté du boîtier de support (1), le mécanisme de limitation (7) est situé sous le mécanisme de tréfilage (5), le mécanisme de guidage du fil (8) est situé sous le mécanisme de limitation (7), le mécanisme de tréfilage (50) comprend un siège de support (43), le siège de support (43) est relié à la bielle (6), une goulotte électrique (42) est disposée dans la paroi intérieure de l'extrémité supérieure du siège de support (43), un bloc coulissant électrique (41) est relié de manière mobile à la paroi intérieure de la goulotte électrique (42) d'une manière serrée, un sixième support (38) est relié à la paroi extérieure de l'extrémité supérieure du bloc coulissant électrique (41), plusieurs troisièmes arbres de connexion (40) sont disposés sur la paroi intérieure de la sixième équerre (38), un quatrième rouleau (39) est relié à la paroi extérieure de chacun des troisièmes arbres de connexion (40) par manchonnage, un fil (2) est disposé sur le crochet (4), et le fil (2) passe à travers le mécanisme de limitation (7) et le mécanisme de guidage du fil (8) dans l'ordre.

2. Mécanisme d'alimentation en fil adapté au dépôt par fusion d'un fil flexible selon la revendication 1, dans lequel le mécanisme de guidage du fil (8) comprend un bloc de limitation (21), une troisième bielle (20) est disposée des deux côtés du bloc de limitation (21), la troisième bielle (20) est reliée à la paroi intérieure du boîtier de support (1), un troisième rouleau (23) est disposé à côté du bloc de limitation (21), plusieurs tampons en caoutchouc (22) sont disposés sur la paroi extérieure du troisième rouleau (23) à densité égale, et le fil (2) est situé entre les tampons en caoutchouc (22) et le bloc de limitation (21).

3. Mécanisme d'alimentation en fil adapté au dépôt par fusion d'un fil flexible selon la revendication 2, dans lequel un engrenage (24) est relié à la paroi extérieure d'un côté du troisième rouleau (23), un deuxième engrenage (27) est relié à la paroi extérieure de l'engrenage (24) de manière serrée, un deuxième bloc de serrage (26) est relié à la paroi extérieure d'un côté du deuxième engrenage (27), et un moteur (25) est relié à l'une des extrémités du deuxième bloc de serrage (26).

4. Mécanisme d'alimentation en fil adapté au dépôt par fusion d'un fil flexible selon la revendication 3, dans lequel un cinquième support (34) est relié de manière mobile à la paroi intérieure du deuxième bloc de serrage (26) de manière serrée, un siège de connexion (37) est disposé sur les parois intérieures de deux côtés du cinquième support (34), le siège de connexion (37) est relié à l'engrenage (24) et au troisième rouleau (23), respectivement, un troisième support (28) est disposé sur la paroi extérieure d'un côté du cinquième support (34), le troisième support (28) est relié au moteur (25), un quatrième support (30) est relié de manière mobile à la paroi extérieure du cinquième support (34), une deuxième tige pneumatique (31) est disposée sur la paroi intérieure d'un côté du quatrième support (30), et la deuxième tige pneumatique (31) est reliée au cinquième support (34) en même temps.

5. Mécanisme d'alimentation en fil adapté au dépôt par fusion d'un fil flexible selon la revendication 4, dans lequel des bandes de serrage (29) sont disposées sur les parois extérieures des deux côtés du cinquième support (34), des fentes de serrage (32) sont formées dans les parois intérieures des deux côtés du quatrième support (30), et le cinquième support (34) est relié de manière mobile au quatrième support (30) en interconnectant les bandes de serrage (29) et les fentes de serrage (32) d'une manière serrée.

6. Mécanisme d'alimentation en fil adapté au dépôt par fusion d'un fil flexible selon la revendication 5, dans lequel une plaque de support (36) est reliée à la paroi extérieure d'un côté du cinquième support (34), un bloc coulissant (35) est disposé à l'extrémité supérieure de la plaque de support (36), une goulotte supérieure (33) est reliée à l'extrémité supérieure du quatrième support (30), et le bloc coulissant (35) est relié de manière mobile à la goulotte supérieure (33) d'une manière serrée.

7. Mécanisme d'alimentation en fil adapté au dépôt par fusion d'un fil flexible selon la revendication 1, dans lequel le mécanisme de limitation (7) comprend un support (10) et un second support (16), une seconde bielle (9) est reliée à la paroi extérieure d'un côté du support (10), la seconde bielle (9) est reliée au boîtier de support (1), un arbre de connexion (11) est disposé sur la paroi intérieure du support (10), et un rouleau (12) est relié à la paroi extérieure de l'arbre de connexion (11) d'une manière de manchonnage.

8. Mécanisme d'alimentation en fil adapté au dépôt par fusion d'un fil flexible selon la revendication 7, dans lequel des roulements à billes (15) sont disposés sur les parois intérieures de deux côtés du second support (16), un bloc de serrage (13) est relié aux parois intérieures des roulements à billes (15) d'une manière serrée, un second arbre de connexion (14) est relié à un côté du bloc de serrage (13), un deuxième rouleau (18) est relié à la paroi extérieure du deuxième arbre de liaison (14) par manchonnage, des bosses souples (19) sont disposées sur la paroi extérieure du deuxième rouleau (18) à densité égale, une tige pneumatique (17) est reliée à un côté du deuxième support (16), et l'autre côté de la tige pneumatique (17) est relié au boîtier de support (1).
